# EUROPEAN PATENT APPLICATION

(11) **EP 1 580 255 A1**
(43) Date of publication of application: **28.09.2005**
(21) Application number: 04007404.9
(22) Date of filing: 26.03.2004
(51) Int. Cl.: C10L 1/02

(54) **A biofuel for compression-ignition engines and a method for preparing the biofuel**

(71) Applicant: Instytut Chemii Przemyslowe im. Prof. Ignacego Moscickiego, 01-793 Warszawa (PL)
(72) Inventor: Kijenski, Jacek A., 01-466 Warszawa (PL); Lipkowski, Andrzej W., 02-786 Warszawa (PL); Walisiewicz-Niedbalska, Wieslawa, 01-913 Warszawa (PL); Gwardiak, Hanna, 09-400 Plock (PL); Rozycki, Krzysztof, 03-536 Warszawa (PL); Pawlak, Irena, 05-120 Legionowo (PL)
(74) Representative: Teipel, Susanne

(57) **Abstract**

A biofuel for compression-ignition engines containing esters of monohydroxy C₁₋C ₆ alcohols with vegetable oil or animal oil fatty acids or mixtures of those acids in an amount of 0.1-99.9% by weight, esters of glycerol with C₁-C₇ carboxylic acids used in an amount of 0.1-99.9% by weight and, optionally, other esters of glycerol with carboxylic acids, free fatty acids, C₁-C₆ alcohols in a total amount of 0-10% by weight, a diesel oil in an amount of 0-70% by weight, antioxidants, depressants and conservants in a total amount of 0-5% by weight, is prepared by the reaction of a vegetable-oil or an animal-oil fat or a mixture thereof with an ester of a C₁-C₇ carboxylic acid with a C₁-C₆ alcohol taken in a mole ratio from within the range of 1:3 to 1:9 in the presence of an acidic catalyst, run at a temperature from within the range 40°C to 200°C and, optionally, by adding a diesel oil and/or auxiliary agents to the resulting product.

## Description

This invention relates to a biofuel for compression-ignition engines and to a method for preparing the biofuel.

Esters of fatty acids with low-molecular-weight alcohols, prepared from vegetable and animal fats, constitute an intermediate product for preparing numerous compounds, for example, fatty alcohols and derivatives thereof, which are used in household chemistry as surface-active compounds. Products prepared from naturally occurring raw materials of fats, *i.e.*, vegetable oils or animal fats, are generally termed the oleochemicals. One direction of utilization of esters of fatty acids and short-chained alcohols, particularly methyl alcohol, is to use them as a fuel for compression-ignition engines. These esters, which are called the biodiesel or biofuel, are used either directly as a fuel or in a mixture with a diesel oil. In such fuels, additives are often used, *e.g.*, depressants (lowering the cloud point of the fuel) and conservants.

A well-known biofuel constitutes a mixture of esters of C₁―C₄ alcohols with C₁₀―C₂₄ fatty acids or their mixture with an oil of petrochemical origin.

US Patent 5 578 090 has revealed a biofuel which constitutes a mixture of methyl esters of fatty acids and glycerol ethers.

Polish Patent PL 163 001 has described a fuel of petrochemical origin which contains as an additive the esters of C₁―C₄ alcohols with vegetable-oil or animal oil-derived fatty acids, and monoglycerides, diglycerides and triglycerides, and also alcohols.

Polish Patent Application P-306 614 has described a fuel for compression-ignition engines which contains as an additive the methyl esters of fatty acids in an amount of 35―55% and, additionally, about 30% of a monobasic alcohol.

Polish Patent PL 163 379 has described a stepwise procedure for preparing esters of C₁― C₄ alcohols with fatty acids, involving acid hydration applied as a preliminary step which is carried out with phosphoric acid and/or citric acid and/or acetic anhydride and/or maleic anhydride, run in the presence of methyl alcohol and water, and a simultaneous esterification of free fatty acids followed by subsequent steps of alcoholysis of rapeseed oil with anhydrous methanol in the presence of a basic catalyst.

Surprisingly, it was found that a very good fuel is the fuel containing a mixture of esters of C₁―C₆ alcohols with vegetable-oil and/or animal oil-derived fatty acids and esters of glycerol with C₁―C₇ carboxylic acids and, optionally, a diesel oil, small amounts of other esters of glycerol with carboxylic acids, of C₁―C₆ alcohols, and of auxiliary agents.

The biofuel for compression-ignition engines that is the object of this invention contains esters of C₁―C₆ monohydroxy alcohols with vegetable-oil or animal oil-derived fatty acids or mixtures of these acids in an amount of 0.1―99.9% by weight, esters of glycerol with C₁―C₇ carboxylic acids in amounts of 0.1-99.9% by weight and, optionally, other esters of glycerol with carboxylic acids, free carboxylic acids, and C₁―C₆ alcohols in a total amount of 0-10% by weight, diesel oil in an amount of 0―70%, antioxidants, depressants, and conservants added in a total amount of 0-5% by weight.

As an ester of a C₁―C₆ monohydroxy alcohol with fatty acids, the fuel preferably contains the methyl or ethyl esters of rapeseed oil fatty acids or a mixture of these esters.

As an ester of glycerol with C₁―C₇ fatty acids, the fuel preferably contains glycerol acetate.

This invention relates also to a method for preparing the biofuel having the composition as specified above.

A method for preparing the biofuel containing esters of C₁―C₆ monohydroxy alcohols with vegetable-oil or animal oil-derived fatty acids or mixtures of these acids in an amount of 0.1-99.9% by weight, esters of glycerol with C₁―C₇ carboxylic acids in an amount of 0.1-99.9% by weight and, optionally, other esters of glycerol with carboxylic acids, free fatty acids and C₁―C₆ alcohols in a total amount of 0-10% by weight, diesel oil in an amount of 0-70%, antioxidants, depressants, and conservants in a total amount of 0-5%, involves the reaction of a vegetable fat or an animal fat or a mixture of such fats with an ester of a C₁―C₇ carboxylic acid with a C₁―C₆ alcohol used in the mole ratio of 1:3 to 1:9 in the presence of an acidic catalyst, run at a temperature from within the range of 40°C to 200°C and, optionally, addition of a diesel oil and/or auxiliary agents to the resulting product.

Preferably, a vegetable fat or an animal fat or a mixture of these fats is used at a mole ratio of 1:3 to 1:6 to the ester of a C₁―C₇ carboxylic acid with a C₁―C₆ alcohol.

According to the present invention, a particularly preferable procedure to run the reaction for making the biofuel is to use a heterogeneous acidic catalyst, especially an acid agent adsorbed on a carrier.

Preference is given to the use of mineral acids as acidic catalysts including sulfuric acid or phosphoric acid adsorbed on carriers that have a well-developed specific surface like an oxide of silicon or aluminum or magnesium or aluminosilicates or mixtures thereof.

As a reaction catalyst, an ion-exchange acidic resin is preferably used.

The biofuel of the composition as specified by the present invention is characterized by an ignition temperature of 100―116°C, which is suitable for the intended application.

A well-known procedure to prepare a biofuel containing esters of low-molecular-weight alcohols with naturally occurring fatty acids has involved transesterification of vegetable or animal fats with low-molecular-weight monohydroxy alcohols, which affords as a by-product glycerol fractions containing 25-65% of glycerol. After the main product has been isolated, the glycerol fractions are submitted to a toilsome purification treatment. This purification involves several steps including removal of the resulting alkali metal salts of fatty acids, separation of inorganic salts, evaporation of water, and distillation of glycerol. In the classical method of alcoholysis, the resulting glycerol is removed from the main product and purified to reach a commercial grade purity.

A method for preparing the biofuel according to the present invention is to make an ester of a C₁―C₆ alcohol with a C₁―C₇ acid, rather than a low-molecular weight alcohol, react with vegetable or animal fats. As a result of the transesterification reaction, the esters of vegetable-oil or animal oil-derived fatty acids with C₁―C₆ alcohols and esters of glycerol with C₁―C₇ acids are obtained as biofuel components. In this method, glycerol is not isolated as a by-product but, instead, it is utilized in the form of esters with low-molecular-weight carboxylic acids, as a component of the biofuel.

Running the reaction of preparation of the biofuel by the method according to the present invention allows to minimize the amount of the noxious contaminated glycerol fractions to be discharged to the environment and thus to enhance the protection of the natural environment.

The method to prepare the biofuel with the application of a heterogeneous catalyst allows to reduce the cost of production of the biofuel by running the reaction without having to remove the catalyst after the reaction has been completed and allows to run the process in a continuous manner.

The post-reaction mixture can be treated to recover, by distillation, the excess of the ester of a C₁―C₇ acid with a C₁―C₆ alcohol, and to recycle it to the process of making the biofuel. Removal of the excess of one reactant from the post-reaction mixture and its re-use for the process allows to reduce the cost of consumption of the raw materials.

The compositions and the method of preparation of the biofuel according to this invention are illustrated by the following detailed examples. These examples are not meant to limit the scope of the invention that has been set forth in the foregoing description.

**Example I.** The biofuel according to the present invention containing methyl esters of rapeseed-oil fatty acids in the amount of 20% by weight, diesel oil 45 % by weight, other esters of glycerol with carboxylic acids (glycerol diacetate, fatty acid monoglycerides, glycerol monoacetate, fatty acid diglycerides, fatty acid triglycerides) in a total amount of 2.4% by weight, free fatty acids and methyl alcohol in a total amount of 0.5% by weight, and butylhydroxytoluene as antioxidant in the amount of 1.2% by weight, has the appearance of a clear homogeneous liquid. The biofuel is characterized by an ignition temperature of 114°C, a sulfur content of 3 ppm, a phosphorus content of 0.5 ppm, and a cetane number of 52.

**Example II.** The components were mixed to yield the biofuel containing: diesel oil 70% by weight, methyl esters of rapeseed-oil fatty acids 24% by weight, and glycerol acetate 6% by weight. The biofuel was characterized by the following property data: ignition temperature 100°C, cetane number 51, sulfur content 2 ppm, phosphorus content below 0.1 ppm.

**Example III.** Methyl acetate, 5 weight parts, and sulfuric acid used as catalyst, 0.2 weight parts, were added to 10 weight parts of rapeseed oil, and the mixture was heated for 2 hours at a temperature of 60°C in a reactor equipped with a reflux condenser. Next, the sulfuric acid was removed from the system by washing it with water and the excess of methyl acetate was distilled off. The mixture thus prepared contained methyl ester of rapeseed-oil acid, 79.4% by weight, glycerol acetate17.8% by weight, and other esters of glycerol with carboxylic acids (glycerol diacetate, fatty acid monoglycerides, glycerol monoacetate, fatty acid diglycerides, fatty acid triglycerides) in a total amount of 1.5% by weight, free fatty acids, glycerol and methyl alcohol in a total amount of 0.5% by weight. The resulting mixture was a clear homogeneous liquid, ignition temperature 114°C, sulfur content 3 ppm, cetane number 48, and phosphorus content 4 ppm.

**Example IV**. Ethyl acetate, 4.5 weight parts, and p-toluenesulfonic acid used as catalyst, 0.3 weight parts, were added to 10 weight parts of rapeseed oil and the mixture was heated for 1 hour at a temperature of 75°C in a reactor equipped with a reflux condenser. Next the p-toluenesulfonic acid was washed away from the system with water and the excess of ethyl acetate was distilled off. The resulting mixture contained methyl esters of rapeseed-oil acid, 79.3% by weight, glycerol acetate, 16.9% by weight, other esters of glycerol with carboxylic acids (glycerol diacetate, fatty acid monoglycerides, glycerol monoacetate, fatty acid diglycerides, fatty acid triglycerides) in a total amount of 2.4% by weight, free fatty acids, glycerol and methyl acohol in a total amount of 0.8% by weight. The mixture obtained was a clear homogeneous liquid, ignition temperature 114°C, sulfur content 4 ppm, cetane number 49, phosphorus content 4 ppm.

**Example V.** Methyl acetate, 3.75 weight parts, and a Rohm & Haas' Amberlyst 35DRY ion-exchange resin, 0.2 weight part, were added to 10 weight parts of rapeseed oil and the mixture was heated for 1 hour at a temperature of 50―55°C in a reactor equipped with a stirrer and a reflux condenser. Next, the excess of methyl acetate was distilled off and the ion-exchange resin was removed by filtration. The resulting mixture contained methyl esters of rapeseed-oil acid, 80.3% by weight, glycerol acetate 18.1% by weight, other esters of glycerol with carboxylic acids ((glycerol diacetate, fatty acid monoglycerides, glycerol monoacetate, fatty acid diglycerides, fatty acid triglycerides) in a total amount of 0.5 wt.%, free fatty acids, glycerol and methyl alcohol in a total amount of 0.5 wt.%. The *resulting* mixture was a clear homogeneous liquid, ignition temperature 116°C, sulfur content 3 ppm, cetane number 50, phosphorus content 2 ppm.

**Example VI**. Ethyl acetate, 2 weight parts, and sulfuric acid, 0.3 weight parts, were added to 9 weight parts of vacuum-dried rapeseed oil and 1 weight part of animal fat (tallow), and the mixture was heated for 2.5 hours at a temperature of 70―80°C in a reactor equipped with a stirrer and a reflux condenser. After the reaction had been completed, the excess of ethyl acetate was distilled off and sulfuric acid was washed away with water from the remaining reaction mixture. The resulting mixture contained ethyl esters of rapeseed-oil acid , 81.1% by weight, glycerol acetate 16.1% by weight, other esters of glycerol with carboxylic acids (glycerol diacetate, fatty acid monoglycerides, glycerol monoacetate; fatty acid diglycerides, fatty acid triglycerides) in a total amount of 1.1% by weight, free fatty acids, glycerol and methyl alcohol in total amount of 0.7% by weight. The mixture was a clear homogeneous liquid, ignition temperature 111°C, sulfur content 4 ppm, cetane number 50, phosphorus content 4 ppm

**Example VII.** Methyl acetate, 30 weight parts, was added to 10 weight parts of dried rapeseed oil at a temperature of 30°C and the mixture was fed onto a catalyst-filled column; the catalyst was silicon oxide carrying 5% (carrier weight basis) of sulfuric acid adsorbed on it. The reaction was run at a temperature of 52―57°C. After the reaction had been completed, the reaction mixture containing 30 weight parts of fatty acid methyl esters, 20 weight parts of glycerol acetate, and 10 weight parts of methyl acetate was fed in a continuous manner into a distillation column. The methyl acetate that was removed in a continuous manner was recycled to the transesterification step. The resulting biofuel containing 80 weight parts of methyl esters of rapeseed oil and 20 weight parts of glycerol acetate was a clear homogeneous liquid characterized by a cetane number of 59, ignition temperature of 113°C, sulfur content 1 ppm, free fatty acids 0.2% by weight, and phosphorus content 0.5 ppm.

**Example VIII.** Methyl acetate, 6 weight parts, was added to 10 weight parts of rapeseed oil, and after the mixture had been stirred, a catalyst was added at a temperature of 25°C; the catalyst was silicon oxide with sulfuric acid adsorbed on it. The reaction was run at 55°C. After the reaction had been completed, the reaction mixture containing 78 weight parts of fatty acid methyl esters, 19 weight parts of glycerol acetate and 3 weight parts of methyl acetate, was fed in a continuous manner into a distillation column to remove the methyl acetate and to recycle it to the reaction. The resulting mixture contained 81.0 weight parts of methyl esters of rapeseed oil and 17.4 weight parts of glycerol acetate, 0.20 weight part of free fatty acids, and 0.02 weight part of methyl acetate. The resulting mixture was a clear homogeneous liquid characterized by a cetane number of 57, ignition temperature of 114°C, sulfur content 1 ppm, free fatty acids 0.2% and phosphorus content 0.5 ppm.

**Example IX**. Ethyl acetate, 10 weight parts, was added to 10 weight parts of rapeseed oil and the mixture was heated to a temperature of 50°C and fed onto a catalyst-filled column to flow down gravitationally; the catalyst was a silicagel with sulfuric acid adsorbed on it. The reaction was run at a temperature of 75―77°C. After the reaction had been completed, the reaction mixture containing 77 weight parts of fatty acid ethyl esters, 17.2 weight parts of glycerol acetate and 10 weight parts of ethyl acetate, was fed into a distillation column to remove the ethyl acetate at a reduced pressure and to recycle it to the reaction. The resulting mixture contained 81.2 weight parts of ethyl esters of rapeseed oil and 18.4 weight parts of glycerol acetate, 0.15 weight part of free fatty acids, and 0.02 weight part of ethyl acetate. The mixture was a clear liquid characterized by a cetane number of 58, ignition temperature of 113°C, sulfur content 2 ppm, free fatty acids 0.2%, and phosphorus content 0.5 ppm.

**Example X.** Methyl acetate, 4 weight parts, was added to 10 weight parts of rapeseed oil, the mixture was heated to a temperature of 30°C and fed onto a molecular sieve-filled column to remove the residual moisture. A catalyst was added to the mixture and the transesterification reaction was run at a temperature of 50―57°C. The catalyst was magnesium oxide with phosphoric acid adsorbed on it. After the reaction had been completed, the reaction mixture containing 78 weight parts of fatty acid methyl esters, 19 weight parts of glycerol acetate and 3 weight parts of methyl acetate, was fed into a distillation column to remove the methyl acetate and to recycle it to the reaction. The resulting mixture contained 81.2 weight parts of methyl esters of rapeseed oil and 18.4 weight parts of glycerol acetate, 0.20 weight part of free fatty acids, and 0.02 weight part of methyl acetate. The mixture was a clear liquid characterized by a cetane number of 58, ignition temperature of 114°C, sulfur content 1 ppm, free fatty acids 0.2% and phosphorus content 0.5 ppm.

## Claims

1. A biofuel for compression-ignition engines **characterized by** the feature that the biofuel contains esters of C₁―C₆ alcohols with vegetable-oil or animal oil-derived fatty acids or mixtures of such acids used in amounts of 0.1―99.9% by weight, esters of glycerol with C₁―C₇ carboxylic acids in amounts of 0.1―99.9% by weight and, optionally, other esters of glycerol with carboxylic acids, free fatty acids and C₁―C₆ alcohols in a total amount of 10% by weight, diesel oil in an amount of 0―70% by weight, antioxidants, depressants, and conservants in a total amount of 0―5% by weight.

2. The biofuel according to Claim 1 **characterized by** the feature that, as an ester of a C₁―C₆ monohydroxy alcohol with fatty acids, it contains a methyl ester or an ethyl ester of rapeseed-oil acids or a mixture of those esters.

3. The biofuel according to Claim 1 **characterized by** the feature that, as an ester of glycerol with C₁―C₇ carboxylic acids, it contains glycerol acetate.

4. A method for preparing the biofuel for compression-ignition engines containing esters of C₁―C₆ alcohols with vegetable oil or animal oil fatty acids or mixtures of those acids in an amount of 0.1―99.9% by weight, esters of glycerol with C₁―C₇ carboxylic acids in an amount of 0.1-99.9% by weight and, optionally, other esters of glycerol with carboxylic esters, free fatty acids, C₁―C₆ alcohols in a total amount of 0-10% by weight, diesel oil in an amount of 0-70% by weight, antioxidants, depressants and conservants in a total amount of 0-5% by weight, **characterized by** the feature that the biofuel is prepared by the reaction of a vegetable fat or an animal fat or a mixture of those fats with an ester of a C₁―C₇ carboxylic acid with a C₁―C₆ alcohol taken in a mole ratio from within the range 1:3 to 1:9, in the presence of a catalyst acidic in nature, run at temperatures ranging from 40°C to 200°C and, optionally, by adding a diesel oil and/or auxiliary agents to the resulting product.

5. A method according to Claim 4 **characterized by** the feature that in the reaction a vegetable fat or an animal fat or a mixture of those fats is used in a mole ratio to the ester of a C₁―C₇ carboxylic acid with a C₁―C₆ alcohol from within the range of 1:3 to 1:6.

6. A method according to Claim 4 **characterized by** the feature that the reaction is run in the presence of a heterogeneous acidic catalyst.

7. A method according to Claim 6 **characterized by** the feature that, as a heterogeneous acidic catalyst, an acid agent is used which has been adsorbed on a carrier endowed with a well-developed surface.

8. A method according to Claim 7 **characterized by** the feature that as an acid agent a mineral acid is used.

9. A method according to Claim 8 **characterized by** the feature that as a mineral acid a sulfuric acid or a phosphoric acid is used.

10. A method according to Claim 7 **characterized by** the feature that as a carrier a silicon oxide or aluminum oxide or magnesium oxide or mixtures thereof is used

11. A method according to Claim 7 **characterized by** the feature that as a carrier an aluminosilicate is used

12. A method according to Claim 6 **characterized by** the feature that, as a catalyst for the reaction, an ion-exchange acidic resin is used.
